# EUROPEAN PATENT APPLICATION

(11) **EP 4 418 530 A1**
(43) Date of publication of application: **21.08.2024**
(21) Application number: 23828656.1
(22) Date of filing: 24.11.2023
(51) Int. Cl.: H02P 27/06, H02M 7/5387, H02M 3/28, H02M 3/335, H02M 1/088, H02H 7/12

(54) **MOTOR CONTROLLER, DRIVING CIRCUIT, POWER DEVICE, AND ELECTRIC VEHICLE**

(30) Priority: 28.12.2022 CN 202211697938
(71) Applicant: Huawei Digital Power Technologies Co., Ltd., Shenzhen, Guangdong 518043 (CN)
(72) Inventor: XU, Yankun, Shenzhen, Guangdong 518043 (CN); ZHAO, Lele, Shenzhen, Guangdong 518043 (CN)
(74) Representative: Gill Jennings & Every LLP
(86) International application number: PCT/CN2023/134016
(87) International publication number: WO 2024/139907

(57) **Abstract**

This application provides a motor controller, a drive circuit, a power device, and an electric vehicle. The drive circuit includes a bridge arm circuit and a drive circuit. The bridge arm circuit includes a plurality of switching transistor bridge arms. The drive circuit is configured to provide a plurality of drive voltages to a plurality of switching transistors of the bridge arm circuit respectively. The drive circuit includes a plurality of transformers, a primary-side switch, and a control unit. A primary-side winding of each transformer includes a primary-side primary winding and a primary-side feedback winding. A secondary-side winding of each transformer is configured to output one drive voltage. One end of each primary-side primary winding is configured to connect to a power supply. The other end of each primary-side primary winding is connected to an end of the primary-side switching transistor. At least one primary-side feedback winding is configured to provide a feedback voltage signal to the control unit. The control unit controls operation of the primary-side switching transistor based on the feedback voltage signal. The motor controller provided in embodiments reduces structural complexity of the drive circuit and the motor controller.

## Description

This application claims priority to Chinese Patent Application No.202211697938.4, filed with the China National Intellectual Property Administration on December 28, 2022 and entitled " MOTOR CONTROLLER, DRIVE CIRCUIT, POWER DEVICE, AND ELECTRIC VEHICLE ", which is incorporated herein by reference in its entirety., AND ELECTRIC VEHICLE

### TECHNICAL FIELD

This application relates to the field of electric vehicle technologies, and in particular, to a motor controller, a drive circuit, a power device, and an electric vehicle.

### BACKGROUND

A motor controller usually uses a plurality of switching transistor bridge arms to form an inverter circuit to provide an alternating current to a motor, and a plurality of switching transistors in the plurality of switching transistor bridge arms need to be turned on or off in cooperation with each other and independently of each other. An existing motor controller usually uses a plurality of drive circuits to provide drive voltages to a plurality of switching transistors respectively. Therefore, a large quantity of drive circuits need to be configured for the motor controller, resulting in a complex internal circuit layout. Therefore, how to reduce structural complexity of drive circuits and a motor controller in which the drive circuits are located is a technical problem to be resolved in this field.

### SUMMARY

This application provides a motor controller, a drive circuit, a power device, and an electric vehicle, to resolve a technical problem in the conventional technology that drive circuits and a motor controller in which the drive circuits are located have high structural complexity.

A first aspect of this application provides a motor controller, including a bridge arm circuit and a drive circuit. The bridge arm circuit includes a plurality of switching transistor bridge arms, and bridge arm midpoints of the plurality of switching transistor bridge arms are connected to motor windings of a drive motor. The drive circuit is configured to provide a plurality of drive voltages to a plurality of switching transistors of the bridge arm circuit respectively, and the drive circuit includes a plurality of transformers, a primary-side switch, and a control unit.

Specifically, a primary-side winding of each transformer includes a primary-side primary winding and a primary-side feedback winding. A secondary-side winding of each transformer is configured to output one drive voltage. One end of each primary-side primary winding is configured to connect to a power supply. The other end of each primary-side primary winding is connected to an end of the primary-side switching transistor. At least one primary-side feedback winding is configured to provide a feedback voltage signal to the control unit. The control unit controls operation of the primary-side switching transistor based on the feedback voltage signal.

In the drive circuit of the motor controller provided in this embodiment, three drive voltages may be provided to three switching transistors in the bridge arm circuit through the primary-side primary winding of one transformer respectively, so that a large quantity of control circuits, primary-side switches, and other components do not need to be disposed in the drive circuit, and a large quantity of windings do not need to be wound on one transformer. This reduces structural complexity of the drive circuit and the motor controller.

In an embodiment of the first aspect of this application, an undotted terminal of the primary-side primary winding of each transformer is configured to connect to the power supply, and a dotted terminal of the primary-side primary winding of each transformer is connected to an end of the primary-side switching transistor. Therefore, each transformer in the drive circuit provided in this embodiment may receive an input voltage provided by the power supply, so that the transformer may be configured to obtain a drive voltage based on the input voltage.

In an embodiment of the first aspect of this application, a plurality of primary-side feedback windings are connected in parallel, and an end of each feedback winding provides the feedback voltage signal to the control unit. In the drive circuit provided in this embodiment, the primary-side feedback windings of three transformers are connected in parallel, and the voltage feedback signal may be outputted to the control unit, so that the control unit controls operation of the primary-side switching transistor based on the voltage feedback signal, to adjust voltages of drive signals outputted by the three transformers.

In an embodiment of the first aspect of this application, a dotted terminal of the primary-side feedback winding of each transformer provides a feedback signal to the control unit.

In an embodiment of the first aspect of this application, primary-side feedback windings of the plurality of transformers are sequentially connected in series, and an end of the primary-side feedback winding of one transformer provides the feedback voltage signal to the control unit. In the drive circuit provided in this embodiment, the primary-side feedback winding of three transformers are connected in series, and one of the primary-side feedback windings may output the voltage feedback signal to the control unit, so that the control unit controls operation of the primary-side switching transistor based on the voltage feedback signal, to perform detection and protection for a short circuit abnormality or an open circuit abnormality that occurs in any transformer in the three transformers.

In an embodiment of the first aspect of this application, a dotted terminal of the primary-side feedback winding of one transformer provides the feedback voltage signal to the control unit, and an undotted terminal of the primary-side feedback winding of the transformer is connected to a dotted terminal of the primary-side feedback winding of another transformer.

In an embodiment of the first aspect of this application, the control unit includes a feedback signal input terminal, and the feedback signal input terminal receives, through a bleeder circuit, the voltage feedback signal provided by the at least one primary-side feedback winding.

Specifically, the bleeder circuit includes two resistors and at least one diode. One end of one resistor is connected to the feedback signal input terminal, the other of the resistor is connected to one end of the other resistor, the other end of the other resistor is grounded, connection terminals of the two resistors are configured to connect to a cathode of the at least one diode, and an anode of the at least one diode is configured to receive the voltage feedback signal provided by the at least one primary-side feedback winding. The control unit in the drive circuit provided in this embodiment may receive the feedback voltage signal through the bleeder circuit, so that a structure of the drive circuit is simple.

In an embodiment of the first aspect of this application, the secondary-side winding of each transformer includes two secondary-side sub-windings, two ends of each secondary-side sub-winding are connected by a diode and a capacitor that are connected in series, and an end of one secondary-side sub-winding is connected to an end of the other secondary-side sub-winding. In the drive circuit provided in this embodiment, each transformer may provide two drive voltages to the switching transistors through the two secondary-side sub-windings respectively, and the two drive voltages are respectively used for driving the switching transistors to be turned on or off. Because one secondary-side winding may provide two drive voltages at the same time, the structure of the drive circuit is simpler.

In an embodiment of the first aspect of this application, a dotted terminal of one secondary-side sub-winding is connected to a positive electrode of a first diode, a negative electrode of the first diode is connected to one end of a first capacitor, and the other end of the first capacitor is connected to an undotted terminal of the secondary-side sub-winding. An undotted terminal of the other secondary-side sub-winding is connected to one end of a second capacitor, the other end of the second capacitor is connected to a positive electrode of a second diode, and a negative electrode of the second diode is connected to the undotted terminal of the secondary-side sub-winding. The undotted terminal of the secondary-side sub-winding is connected to a dotted terminal of the other secondary-side sub-winding.

In an embodiment of the first aspect of this application, the secondary-side winding of each transformer is configured to connect to one switching transistor by one drive unit, and the drive unit includes a first input terminal, a second input terminal, and an output terminal. An end of one secondary-side sub-winding in the secondary-side winding of each transformer is configured to connect to the first input terminal of the drive unit, an end of the other secondary-side sub-winding in the secondary-side winding is configured to connect to the second input terminal of the drive unit, and a control terminal of the switching transistor is configured to connect to the output terminal of the drive unit. When the first input terminal and the output terminal of the drive unit are connected, the secondary-side winding outputs a first drive voltage to the control terminal of the switching transistor. When the second terminal and the output terminal of the drive unit are connected, the secondary-side winding outputs a second drive voltage to the control terminal of the switching transistor. In the drive circuit provided in this embodiment, the drive unit may receive drive voltages provided by the two secondary-side sub-windings of the transformer, and provide one of the drive voltages to the control terminal of the switching transistor, to control the switching transistor to be turned on or off. When the control unit may adjust a voltage value of the drive voltage based on the voltage feedback signal, the drive unit may drive the switching transistor based on a more accurate drive signal, to ensure that the drive unit accurately drives the switching transistor.

In an embodiment of the first aspect of this application, the motor controller includes two drive circuits, and each switching transistor bridge arm includes an upper bridge arm switching transistor and a lower bridge arm switching transistor. One drive circuit is configured to respectively provide the plurality of drive voltages to the plurality of upper bridge arm switching transistors of the bridge arm circuit, and the other drive circuit is configured to respectively provide the plurality of drive voltages to the plurality of upper bridge arm switching transistors of the bridge arm circuit, so that power supply ground of the three upper bridge arm switching transistors is isolated from power supply ground of the three lower bridge arm switching transistors.

In an embodiment of the first aspect of this application, the primary-side switching transistor is periodically turned on or off based on a control signal outputted by the control unit. The control unit is configured to adjust, based on a result of comparing the feedback voltage signal with at least one predetermined value, a duty cycle of the control signal outputted by the control unit, so that the transformer performs voltage conversion on the input voltage in a flyback manner to obtain the drive voltage, and a voltage value of the input voltage is different from a voltage value of a drive signal.

In an embodiment of the first aspect of this application, the control unit is configured to reduce, in response to that a voltage value of the feedback voltage signal is greater than or equal to a first predetermined value, the duty cycle of the control signal outputted by the control unit. Alternatively, the control unit increases, in response to that the voltage value of the feedback voltage signal is less than or equal to a second predetermined value, the duty cycle of the control signal outputted by the control unit, where the second predetermined value is less than the first predetermined value. In the drive circuit provided in this implementation, when a voltage value of a drive signal outputted by a secondary-side winding of any transformer in the three transformers does not meet a voltage value required by a switching transistor, the control unit may adjust, based on the voltage feedback signal, a duty cycle at which the primary-side switching transistor is turned on, so that self-voltage balancing of drive signals outputted by the secondary-side windings of the three transformers is implemented through closed-loop voltage control, to reduce deviations between voltage values of the drive signals outputted by the secondary-side windings of the three transformers, and ensure consistency of the voltage values of the drive signals outputted by the secondary-side windings of the three transformers.

Alternatively, the control unit controls the primary-side switching transistor to be turned off in response to that the voltage value of the feedback voltage signal is greater than or equal to a third predetermined value. In the drive circuit provided in this embodiment, when any transformer in the three transformers encounters a short circuit abnormality or an open circuit abnormality and as a result a voltage value of an outputted drive signal is high, the control unit may detect the abnormality in time based on the voltage feedback signal, and adjust, based on the voltage feedback signal, a duty cycle at which the primary-side switching transistor is turned on, to control all the three transformers to stop outputting drive voltages. In this way, overvoltage protection is implemented for the switching transistors driven by the three transformers.

A second aspect of this application provides a drive circuit, including a plurality of transformers, a primary-side switching transistor, and a control unit. Specifically, a primary-side winding of each transformer includes a primary-side primary winding and a primary-side feedback winding. A secondary-side winding of each transformer is configured to output one drive voltage. One end of each primary-side primary winding is configured to connect to a power supply. The other end of each primary-side primary winding is connected to an end of the primary-side switching transistor. At least one primary-side feedback winding is configured to provide a feedback voltage signal to the control unit. The control unit controls operation of the primary-side switching transistor based on the feedback voltage signal. In the drive circuit provided in this embodiment, three drive voltages may be provided to three switching transistors in the bridge arm circuit through the primary-side primary winding of one transformer respectively, so that a large quantity of control circuits, primary-side switches, and other devices do not need to be disposed in the drive circuit, and a large quantity of windings do not need to be wound on one transformer. This reduces structural complexity of the drive circuit and the motor controller.

A third aspect of this application provides a power device, including a drive motor and the motor controller according to any one of the first aspect. The motor controller is configured to supply power to the drive motor.

A fourth aspect of this application provides an electric vehicle, including a wheel, a drive motor, and the motor controller according to any one of the first aspect of this application. The motor controller is configured to supply power to the drive motor, and the drive motor is configured to receive power supplied by the motor controller and drive the wheel.

### BRIEF DESCRIPTION OF DRAWINGS

FIG. 1 is a schematic diagram of a structure of a drive circuit;
FIG. 2 is a schematic diagram of a structure of an electric vehicle according to this application;
FIG. 3 is a schematic diagram of a structure of a motor controller according to this application;
FIG. 4 is a schematic diagram of a circuit structure of a drive circuit according to this application; and
FIG. 5 is a schematic diagram of a circuit structure of another drive circuit according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by persons of ordinary skill in the art based on embodiments of this application without creative efforts shall fall within the protection scope of this application.

The terms such as "first", "second", "third", and "fourth" (if exist) in the specification, claims, and the accompanying drawings of this application are only used to distinguish between similar objects, but are not used to describe a specific order or time sequence. It should be understood that the data thus used are interchangeable in appropriate circumstances and that embodiments of this application described herein, for example, can be implemented in other sequences than those illustrated or described. In addition, the terms "include", "comprise" and any other variants are intended to cover a non-exclusive inclusion. For example, a process, method, system, product or device that includes a series of steps or units not only includes those steps or units specified expressly, but also includes other steps or units that are not specified expressly or are inherent to the process, method, product or device.

The connection relationship described in this application is a direct connection or an indirect connection. For example, that A is connected to B may not only be that A is directly connected to B, but also be that A is indirectly connected to B by one or more other electrical components. For example, it may be that A is directly connected to C, and C is directly connected to B. In this way, A is connected to B by C. It may be further understood that "A is connected to B" described in this application may be that A is directly connected to B, or may be that A is indirectly connected to B by one or more other electrical components.

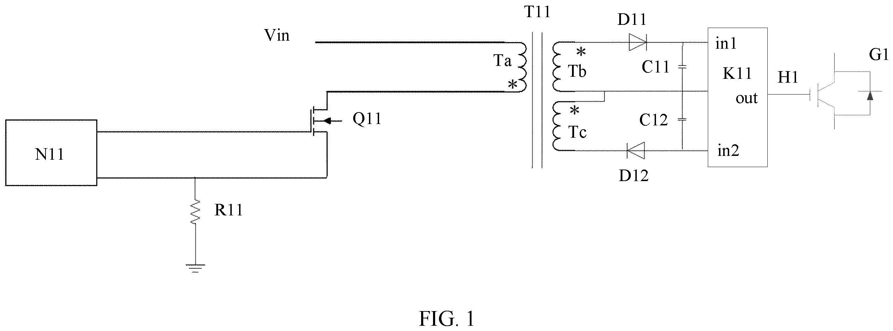

FIG. 1 is a schematic diagram of a structure of a drive circuit. As shown in FIG. 1, a drive circuit 102 includes a transformer T11, a primary-side switching transistor Q11, a control unit N11, and a drive unit K11. The drive circuit 102 is configured to provide a drive voltage to a switching transistor. Generally, a bridge arm circuit in a motor controller includes six switching transistors. Correspondingly, the motor controller needs to include six drive circuits 102. This increases circuit complexity of the motor controller, further increases an area required to implement the motor controller on a circuit board, and increases costs of the motor controller and an electric vehicle in which the motor controller is located. In addition, the motor controller provides drive voltages to the plurality of switching transistors through the plurality of drive circuits 102, and large errors may exist between voltage values of the drive voltages provided by the drive circuits 102, affecting operation efficiency of the bridge arm circuit in the motor controller.

In view of this, this application provides a motor controller, a drive circuit, a power device, and an electric vehicle, to resolve a technical problem in the conventional technology that drive circuits have high structural complexity. Specific embodiments are used below to describe in detail the technical solutions of this application. The following several specific embodiments may be combined with each other, and a same or similar concept or process may not be described repeatedly in some embodiments.

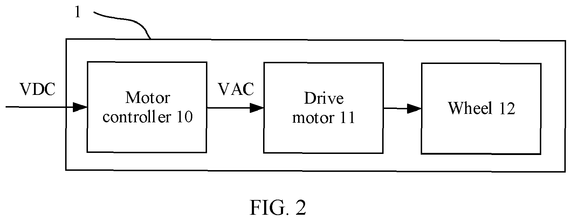

FIG. 2 is a schematic diagram of a structure of an electric vehicle according to this application. An electric vehicle 1 shown in FIG. 2 includes a motor controller 10, a drive motor 11, and a wheel 12. The motor controller 10 is configured to supply power to the drive motor 11. The drive motor 11 is configured to: receive the power supplied by the motor controller 10, and drive the wheel 12 to rotate.

In an embodiment, the electric vehicle 1 includes a power device and the wheel 12. The power device includes the motor controller 10 and the drive motor 11. The power device receives power supplied by a power supply device such as a power battery of the electric vehicle 1 and drives the wheel 12 to rotate.

For example, the motor controller 10 may receive a direct current voltage VDC provided by the power supply device such as the power battery of the electric vehicle 1, and convert the direct current voltage VDC into a three-phase alternating current voltage VAC. The motor controller 10 provides the three-phase alternating current voltage VAC to the drive motor 11 to supply power to the drive motor 11. For example, the three-phase alternating current voltage VAC includes a U-phase alternating current voltage, a V-phase alternating current voltage, a W-phase alternating current voltage, and the like.

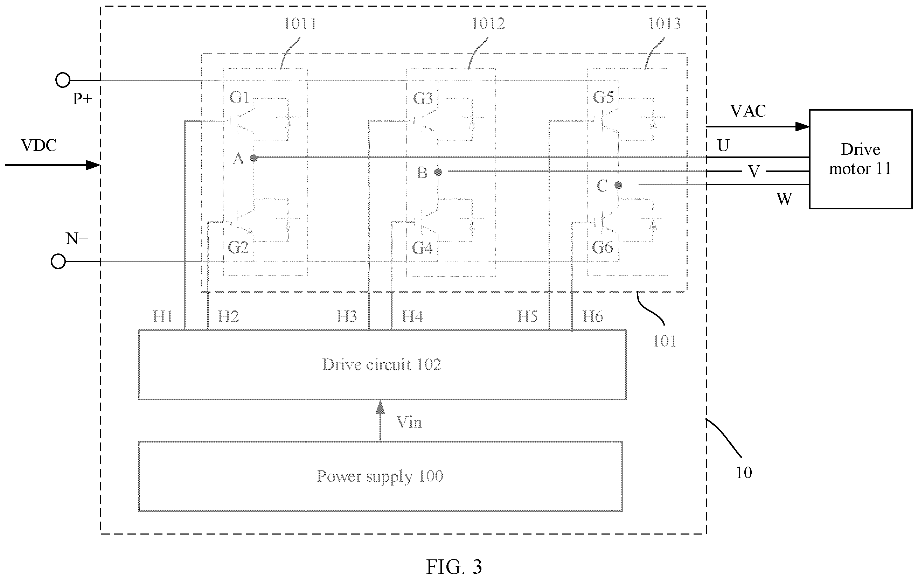

FIG. 3 is a schematic diagram of a structure of a motor controller according to this application. As shown in FIG. 3, the motor controller 10 includes a bridge arm circuit 101 and a drive circuit 102. The bridge arm circuit 101 is configured to receive a direct current voltage VDC, and invert the direct current voltage VDC to obtain a three-phase alternating current voltage VAC. The drive circuit 102 is configured to provide a plurality of drive voltages to a plurality of switching transistors of the bridge arm circuit 101 respectively. The motor controller 10 shown in FIG. 3 may be applied to the electric vehicle 1 and the power device shown in FIG. 1.

In this embodiment of this application, the bridge arm circuit 101 includes a plurality of switching transistor bridge arms. Each switching transistor bridge arm includes an upper bridge arm switching transistor and a lower bridge arm switching transistor. In each switching transistor bridge arm, one end of the upper bridge arm switching transistor and the other end of the lower bridge arm switching transistor are respectively used as two ends of each switching transistor bridge arm, and the other end of the upper bridge arm switching transistor and one end of the lower bridge arm switching transistor are connected to form a bridge arm midpoint of each switching transistor bridge arm. The bridge arm midpoint of each switching transistor bridge arm is configured to connect to motor windings of a drive motor 11. Two bridge arm ends of each switching transistor bridge arm are configured to receive the direct current voltage VDC.

In this embodiment of this application, the upper bridge arm switching transistor and the lower bridge arm switching transistor of each switching transistor bridge arm may be insulated gate bipolar transistors (Insulated Gate Bipolar Transistor, IGBT), silicon carbide (SiC) switching transistors, metal-oxide-semiconductor field-effect transistors (Metal-Oxide-Semiconductor Field-Effect Transistor, MOSFET), bipolar power transistors (bipolar power transistor), wide bandgap semiconductor field-effect transistors, or the like. In this embodiment of this application, an example in which the switching transistors included in the bridge arm circuit 101 are IGBTs is used, and implementation of the switching transistors is not limited.

As shown in FIG. 3, the bridge arm circuit 101 includes a first switching transistor bridge arm 1011, a second switching transistor bridge arm 1012, and a third switching transistor bridge arm 1013. The first switching transistor bridge arm 1011 includes an upper bridge arm switching transistor G1 and a lower bridge arm switching transistor G2. The second switching transistor bridge arm 1012 includes an upper bridge arm switching transistor G3 and a lower bridge arm switching transistor G4. The third switching transistor bridge arm 1013 includes an upper bridge arm switching transistor G5 and a lower bridge arm switching transistor G6.

For example, one end of the upper bridge arm switching transistor G1 is connected to a positive electrode P+ of the direct current voltage VDC, the other end of the lower bridge arm switching transistor G2 is connected to a negative electrode N- of the direct current voltage VDC, and the other end of the upper bridge arm switching transistor G1 is connected to one end of the lower bridge arm switching transistor G2, to form a bridge arm midpoint A of the first switching transistor bridge arm 1011. The bridge arm midpoint A of the first switching transistor bridge arm 1011 is configured to connect to the drive motor 11 and provide a U-phase alternating current voltage to the drive motor 11.

For example, one end of the upper bridge arm switching transistor G3 is connected to the positive electrode P+ of the direct current voltage VDC, the other end of the lower bridge arm switching transistor G4 is connected to the negative electrode N- of the direct current voltage VDC, and the other end of the upper bridge arm switching transistor G3 is connected to one end of the lower bridge arm switching transistor G4, to form a bridge arm midpoint B of the second switching transistor bridge arm 1012. The bridge arm midpoint B of the second switching transistor bridge arm 1012 is configured to connect to the drive motor 11 and provide a V-phase alternating current voltage to the drive motor 11.

For example, one end of the upper bridge arm switching transistor G5 is connected to the positive electrode P+ of the direct current voltage VDC, the other end of the lower bridge arm switching transistor G6 is connected to the negative electrode N- of the direct current voltage VDC, and the other end of the upper bridge arm switching transistor G5 is connected to one end of the lower bridge arm switching transistor G6, to form a bridge arm midpoint C of the third switching transistor bridge arm 1013. The bridge arm midpoint C of the third switching transistor bridge arm 1013 is configured to connect to the drive motor 11 and provide a W-phase alternating current voltage to the drive motor 11.

In this embodiment of this application, the drive circuit 102 is configured to provide a plurality of drive voltages to a plurality of switching transistors of the bridge arm circuit 101 respectively. Specifically, the drive circuit 102 is configured to provide a plurality of drive voltages to upper bridge arm switching transistors and lower bridge arm switching transistors of a plurality of switching transistor bridge arms in the bridge arm circuit 101 respectively. In this embodiment of this application, the drive voltage is used for controlling the switching transistors to be turned on or off.

In the example shown in FIG. 2, the drive circuit 102 is configured to provide a first drive voltage H1 to the upper bridge arm switching transistor G1. The upper bridge arm switching transistor G1 is turned on or off based on the first drive voltage H1. For example, the first drive voltage H1 is at a high level, and the upper bridge arm switching transistor G1 is turned on based on the first drive voltage H1. The first drive voltage H1 is at a low level, and the upper bridge arm switching transistor G1 is turned off based on the first drive voltage H1.

For example, the drive circuit 102 is configured to provide a second drive voltage H2 to the lower bridge arm switching transistor G2, the drive circuit 102 is configured to provide a third drive voltage H3 to the upper bridge arm switching transistor G3, the drive circuit 102 is configured to provide a fourth drive voltage H4 to the lower bridge arm switching transistor G4, the drive circuit 102 is configured to provide a fifth drive voltage H5 to the upper bridge arm switching transistor G5, and the drive circuit 102 is configured to provide a sixth drive voltage H6 to the lower bridge arm switching transistor G6.

In an embodiment, the drive circuit 102 is configured to receive an input voltage Vin provided by a power supply 100, and obtain, based on the input voltage Vin, a plurality of drive voltages provided to the plurality of switching transistors of the bridge arm circuit 101 respectively. In an embodiment, the power supply 100 shown in FIG. 2 may be a digital signal processing (digital signal processing, DSP) unit in the motor controller 10.

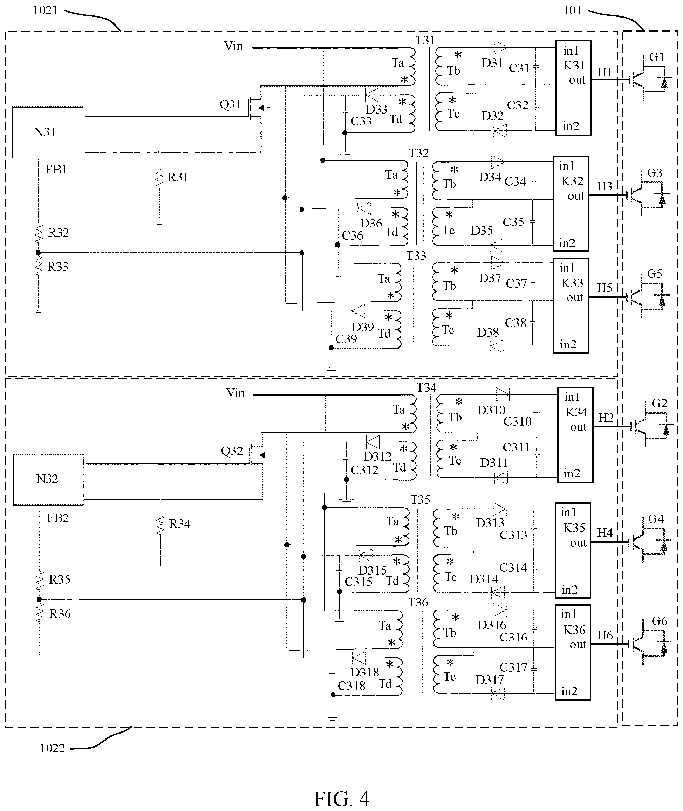

FIG. 4 is a schematic diagram of a circuit structure of a drive circuit according to this application. The drive circuit shown in FIG. 4 may be applied to the motor controller 10 shown in FIG. 3.

In this embodiment of this application, the motor controller 10 includes two drive circuits. One drive circuit in the two drive circuits is configured to provide the plurality of drive voltages to the plurality of upper bridge arm switching transistors of the bridge arm circuit in the motor controller 10 respectively. The other drive circuit in the two drive circuits is configured to provide the plurality of drive voltages to the plurality of lower bridge arm switching transistors of the bridge arm circuit in the motor controller 10 respectively.

In the example shown in FIG. 4, the motor controller 10 includes a drive circuit 1021 and a drive circuit 1022. The drive circuit 1021 is configured to provide the drive voltages H1, H3, and H5 to a plurality of upper bridge arm switching transistors Q1, Q3, and Q5 in the bridge arm circuit 101 respectively. The drive circuit 1022 is configured to provide the drive voltages H2, H4, and H6 to a plurality of lower bridge arm switching transistors Q2, Q4, and Q6 in the bridge arm circuit 101 respectively.

In this embodiment of this application, each drive circuit includes a plurality of transformers, a primary-side switching transistor, and a control unit. A primary-side winding of each transformer includes a primary-side primary winding and a primary-side feedback winding. A secondary-side winding of each transformer is configured to output one drive voltage. One end of each primary-side primary winding is configured to connect to a power supply. The other end of each primary-side primary winding is connected to an end of the primary-side switching transistor. At least one primary-side feedback winding is configured to provide a feedback voltage signal to the control unit. The control unit is configured to control operation of the primary-side switching transistor based on the feedback voltage signal.

In an embodiment, an undotted terminal of the primary-side primary winding of each transformer in each drive circuit is configured to connect to the power supply, and a dotted terminal of the primary-side primary winding of each transformer is connected to an end of the primary-side switching transistor.

In the example shown in FIG. 4, the drive circuit 1021 includes a primary-side switching transistor Q31, a control unit N31, and a plurality of transformers. The plurality of transformers include a first transformer T31, a second transformer T32, and a third transformer T33. One end of the primary-side primary winding of each transformer is configured to connect to the power supply 100, and the other end of the primary-side primary winding of each transformer is configured to connect to an end of the primary-side switching transistor Q31.

For example, an undotted terminal of a primary-side primary winding Ta of the first transformer T31 is configured to: connect to the power supply 100, and receive an input voltage Vin provided by the power supply 100. A dotted terminal of the primary-side primary winding Ta of the first transformer T31 is connected to one end of the primary-side switching transistor Q31, and the other end of the primary-side switching transistor Q31 is grounded through a resistor R31. An undotted terminal of a primary-side primary winding Ta of the second transformer T32 is configured to: connect to the power supply 100, and receive the input voltage Vin provided by the power supply 100. A dotted terminal of a primary-side primary winding Ta of the second transformer T32 is connected to an end of the primary-side switching transistor Q31. An undotted terminal of a primary-side primary winding Ta of the third transformer T33 is configured to: connect to the power supply 100, and receive the input voltage Vin provided by the power supply 100. A dotted terminal of the primary-side primary winding Ta of the third transformer T33 is connected to an end of the primary-side switching transistor Q31.

In this embodiment of this application, the secondary-side winding of each transformer is configured to connect to one switching transistor in the bridge arm circuit 101 by one drive unit. Specifically, the secondary-side winding of each transformer is configured to output one drive voltage to one switching transistor in the bridge arm circuit 101 by one drive unit.

As shown in FIG. 4, the secondary-side winding of the first transformer T31 outputs the drive voltage H1 to an upper bridge arm switching transistor G1 through a first drive unit K31, the secondary-side winding of the second transformer T21 outputs the drive voltage H3 to an upper bridge arm switching transistor G3 through a second drive unit K32, and the secondary-side winding of the third transformer T33 outputs the drive voltage H5 to an upper bridge arm switching transistor G5 through a third drive unit K33.

In this embodiment of this application, each drive unit includes a first input terminal, a second input terminal, and an output terminal. In this embodiment of this application, the secondary-side winding of each transformer includes two secondary-side sub-windings, two ends of each secondary-side sub-winding are connected by a diode and a capacitor that are connected in series, and an end of one secondary-side sub-winding is connected to an end of the other secondary-side sub-winding. An end of one secondary-side sub-winding in the secondary-side winding of each transformer is configured to connect to the first input terminal of the drive unit, an end of the other secondary-side sub-winding in the secondary-side winding is configured to connect to the second input terminal of the drive unit, and a control terminal of the switching transistor is configured to connect to the output terminal of the drive unit.

In this embodiment of this application, the first input terminal and the output terminal of each drive unit are connected, and the secondary-side winding outputs a first drive voltage to the control terminal of the switching transistor. The second input terminal and the output terminal of each drive unit are connected, and the secondary-side winding outputs a second drive voltage to the control terminal of the switching transistor.

As shown in FIG. 4, the first drive unit K31 includes a first input terminal in1, a second input terminal in2, and an output terminal out. The secondary-side winding of the first transformer T31 includes a secondary-side sub-winding Tb and a secondary-side sub-winding Tc. A dotted terminal of the secondary-side sub-winding Tb is connected to a positive electrode of a first diode D31, a negative electrode of the first diode D31 is connected to one end of a first capacitor C31, and the other end of the first capacitor C31 is connected to an undotted terminal of the secondary-side sub-winding Tb. A dotted terminal of the secondary-side sub-winding Tc is connected to one end of a second capacitor C32, the other end of the second capacitor C32 is connected to a positive electrode of a second diode D32, and a negative electrode of the second diode D32 is connected to an undotted terminal of the secondary-side sub-winding Tc. In addition, the undotted terminal of the secondary-side sub-winding Tb of the first transformer T31 is connected to the dotted terminal of the secondary-side sub-winding Tc.

The dotted terminal of the secondary-side sub-winding Tb is connected to the first input terminal in1 of the first drive unit K31 by the first diode D31, and the undotted terminal of the secondary-side sub-winding Tc is further connected to the second input terminal in2 of the first drive unit K31 by the second diode D32. The output terminal out of the first drive unit K31 is configured to connect to a control terminal of the upper bridge arm switching transistor G1. The first input terminal in1 of the drive unit K31 is connected to the output terminal out, and a secondary-side sub-winding Tb1 of the first transformer T31 provides a first drive voltage to the upper bridge arm switching transistor G1 through the drive unit K31. The second input terminal in2 of the drive unit K31 is connected to the output terminal out, and the secondary-side sub-winding Tc of the first transformer T31 provides a second drive voltage to the upper bridge arm switching transistor G1 through the drive unit K31.

As shown in FIG. 4, the second drive unit K32 includes a first input terminal in1, a second input terminal in2, and an output terminal out. The secondary-side winding of the second transformer T32 includes a secondary-side sub-winding Tb and a secondary-side sub-winding Tc. A dotted terminal of the secondary-side sub-winding Tb is connected to a positive electrode of a first diode D34, a negative electrode of the first diode D34 is connected to one end of a first capacitor C34, and the other end of the first capacitor C34 is connected to an undotted terminal of the secondary-side sub-winding Tb. A dotted terminal of the secondary-side sub-winding Tc is connected to one end of a second capacitor C35, the other end of the second capacitor C35 is connected to a positive electrode of a second diode D35, and a negative electrode of the second diode D35 is connected to an undotted terminal of the secondary-side sub-winding Tc. The undotted terminal of the secondary-side sub-winding Tb of the second transformer T32 is connected to the dotted terminal of the secondary-side sub-winding Tc.

The dotted terminal of the secondary-side sub-winding Tb is connected to the first input terminal in1 of the second drive unit K32 by the first diode D34, and the undotted terminal of the secondary-side sub-winding Tc is further connected to the second input terminal in2 of the second drive unit K32 by the second diode D35. The output terminal out of the second drive unit K32 is configured to connect to a control terminal of the upper bridge arm switching transistor G3. The first input terminal in1 of the drive unit K32 is connected to the output terminal out, and a secondary-side sub-winding Tb2 of the second transformer T32 provides a first drive voltage to the upper bridge arm switching transistor G3 through the drive unit K32. The second input terminal in2 of the drive unit K32 is connected to the output terminal out, and a secondary-side sub-winding Tc2 of the second transformer T32 provides a second drive voltage H3-2 to the upper bridge arm switching transistor G3 through the drive unit K32.

As shown in FIG. 4, the third drive unit K33 includes a first input terminal in1, a second input terminal in2, and an output terminal out. The secondary-side winding of the third transformer T33 includes a secondary-side sub-winding Tb and a secondary-side sub-winding Tc. A dotted terminal of the secondary-side sub-winding Tb is connected to a positive electrode of a first diode D37, a negative electrode of the first diode D37 is connected to one end of a first capacitor C37, and the other end of the first capacitor C37 is connected to an undotted terminal of the secondary-side sub-winding Tb. A dotted terminal of the secondary-side sub-winding Tc is connected to one end of a second capacitor C38, the other end of the second capacitor C38 is connected to a positive electrode of a second diode D38, and a negative electrode of the second diode D38 is connected to an undotted terminal of the secondary-side sub-winding Tc. The undotted terminal of the secondary-side sub-winding Tb of the third transformer T33 is connected to the dotted terminal of the secondary-side sub-winding Tc.

The dotted terminal of the secondary-side sub-winding Tb is further connected to the first input terminal in1 of the third drive unit K33 by the first diode D37, and the undotted terminal of the secondary-side sub-winding Tc is connected to the second input terminal in2 of the third drive unit K33 by the second diode D38. The output terminal out of the first drive unit K33 is configured to connect to a control terminal of the upper bridge arm switching transistor G5. The first input terminal in1 of the drive unit K33 is connected to the output terminal out, and a secondary-side sub-winding Tb3 of the third transformer T33 provides a first drive voltage to the upper bridge arm switching transistor G5 through the drive unit K33. The second input terminal in2 of the drive unit K33 is connected to the output terminal out, and the secondary-side sub-winding Tc3 of the third transformer T33 provides a second drive voltage to the upper bridge arm switching transistor G5 through the drive unit K33.

In an embodiment, a plurality of primary-side feedback windings in the drive circuit provided in this embodiment of this application are connected in parallel, and an end of each primary-side feedback winding provides the feedback voltage signal to the control unit.

As shown in FIG. 4, a primary-side feedback winding Td of the first transformer T31, a primary-side feedback winding Td of the second transformer T32, and a primary-side feedback winding Td of the third transformer T31 are connected in parallel.

In an embodiment, a dotted terminal of the primary-side feedback winding of each transformer in the drive circuit provided in this embodiment of this application provides the feedback voltage signal to the control unit. As shown in FIG. 4, a dotted terminal of the primary-side feedback winding Td of the first transformer T31, a dotted terminal of the primary-side feedback winding Td of the second transformer T32, and a dotted terminal of the primary-side feedback winding Td of the third transformer T31 are configured to jointly provide a feedback voltage signal FB1 to the control unit N31.

In an embodiment, the primary-side feedback windings of the plurality of transformers in the drive circuit provided in this embodiment of this application are sequentially connected in series. An end of the primary-side feedback winding of one transformer is configured to provide the feedback voltage signal to the control unit. Specifically, in one transformer, a dotted terminal of the primary-side feedback winding provides the feedback voltage signal to the control unit, and an undotted terminal of the feedback winding is connected to a dotted terminal of the primary-side feedback winding of another transformer.

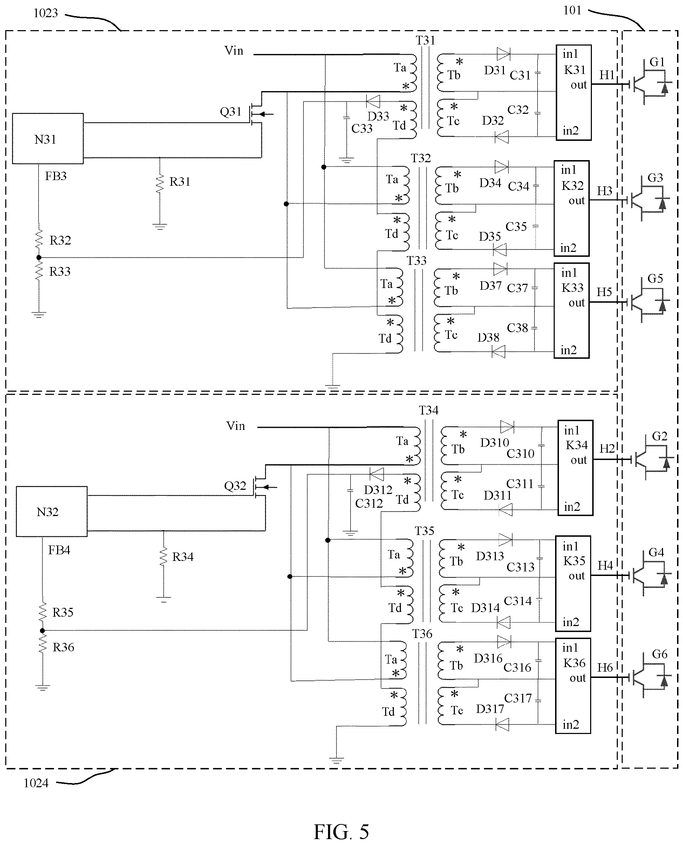

FIG. 5 is a schematic diagram of a circuit structure of another drive circuit according to this application. As shown in FIG. 5, the motor controller 10 includes two drive circuits. For example, the motor controller 10 includes a drive circuit 1023 and a drive circuit 1024. The drive circuit 1023 is configured to provide the drive voltages H1, H3, and H5 to the plurality of upper bridge arm switching transistors Q1, Q3, and Q5 in the bridge arm circuit 101 respectively. The drive circuit 1024 is configured to provide the drive voltages H2, H4, and H6 to the plurality of lower bridge arm switching transistors Q2, Q4, and Q6 in the bridge arm circuit 101 respectively.

A difference between the drive circuit 1023 and the drive circuit 1024 shown in FIG. 5 and the drive circuit 1021 and the drive circuit 1022 shown in FIG. 4 lies in a connection manner of a primary-side feedback winding of each transformer.

As shown in FIG. 5, the drive circuit 1023 includes a first transformer T31, a second transformer T32, and a third transformer T31. A primary-side feedback winding Td of the first transformer T31, a primary-side feedback winding Td of the second transformer T32, and a primary-side feedback winding Td of the third transformer T31 are connected sequentially connected in series. The dotted terminal of the primary-side feedback winding Td of the first transformer T31 is configured to provide a feedback voltage signal FB3 to the control unit N31, and an undotted terminal of the primary-side feedback winding Td of the first transformer T31 is connected to the dotted terminal of the primary-side feedback winding Td of the second transformer T32. In addition, an undotted terminal of the primary-side feedback winding Td of the second transformer T32 is connected to the dotted terminal of the primary-side feedback winding Td of the third transformer T33, and an undotted terminal of the primary-side feedback winding Td of the third transformer T33 is grounded.

In this embodiment of this application, the control unit includes a feedback signal input terminal. The feedback signal input terminal receives, through a bleeder circuit, the voltage feedback signal provided by the at least one primary-side feedback winding. The bleeder circuit includes two resistors and at least one diode. Two ends of one resistor are respectively connected to the feedback signal input terminal and one end of the other resistor, the other end of the other resistor is grounded, and connection terminals of the two resistors are configured to connect to a cathode of the at least one diode. An anode of the at least one diode is configured to receive the voltage feedback signal provided by the at least one primary-side feedback winding.

As shown in FIG. 4, the control unit N31 includes a feedback signal input terminal. One end of a resistor R32 is connected to the feedback signal input terminal of the control unit N31, the other end of the resistor R32 is connected to one end of a resistor R33, and the other end of the resistor R33 is grounded. Connection terminals of the resistor R32 and the resistor R33 are configured to connect to cathodes of a diode D33, a diode D36, and a diode D39. An anode of the diode D33 is configured to receive a voltage feedback signal provided by the primary-side feedback winding Td of the first transformer T31, an anode of the diode D36 is configured to receive a voltage feedback signal provided by the primary-side feedback winding Td of the second transformer T32, and an anode of the diode D39 is configured to receive a voltage feedback signal provided by the primary-side feedback winding Td of the third transformer T33.

In an embodiment, two ends of the primary-side feedback winding Td of the first transformer T31 are configured to connect to two ends of a capacitor C33, two ends of the primary-side feedback winding Td of the second transformer T32 are configured to connect to two ends of a capacitor C36, and two ends of the primary-side feedback winding Td of the third transformer T33 are configured to connect to two ends of a capacitor C39.

As shown in FIG. 5, a control unit N32 includes a feedback signal input terminal. One end of a resistor R35 is connected to the feedback signal input terminal of the control unit N31, the other end of the resistor R35 is connected to one end of a resistor R36, and the other end of the resistor R36 is grounded. Connection terminals of the resistor R35 and the resistor R36 are configured to receive, through a diode D312, a voltage feedback signal provided by a primary-side feedback winding Td of a first transformer T34. Specifically, the connection terminals of the resistor R35 and the resistor R36 are configured to connect to a cathode of the diode D312, and a dotted terminal of the primary-side feedback winding Td of the first transformer T34 is configured to connect to an anode of the diode D312.

In this embodiment of this application, the control unit N31 is configured to send a control signal to the primary-side switching transistor Q31 to control the primary-side switching transistor to be turned on or off. The primary-side switching transistor Q31 is configured to be turned on or off based on a control signal outputted by the control unit N31. Specifically, the primary-side switching transistor Q31 is configured to be periodically and alternately turned on or off based on the control signal outputted by the control unit N31. In an embodiment, the control unit N31 periodically outputs a control signal to the primary-side switching transistor Q31. For example, after outputting the control signal to the primary-side switching transistor Q31 for first duration T1, the control unit N31 stops outputting the control signal for second duration T2. T1 + T2 = T, and T is a period in which the control unit N31 outputs the control signal. A ratio of T1 to T may be referred to as a duty cycle of the control signal.

As shown in FIG. 4, the primary-side switching transistor Q31 receives the control signal sent by the control unit N31, the primary-side switching transistor Q31 is turned on based on the control signal, and a source and a drain of the primary-side switching transistor Q31 are connected. The primary-side switching transistor Q31 does not receive the control signal sent by the control unit N31, and the primary-side switching transistor Q31 is turned off, so that the source and the drain of the primary-side switching transistor Q31 are disconnected.

As shown in FIG. 4, the control unit N31 outputs the control signal, and the primary-side switching transistor Q31 is turned on. The source and the drain of the primary-side switching transistor Q31 are connected. The control unit N31 stops outputting the control signal, and the primary-side switching transistor Q31 is turned off, so that the source and the drain of the primary-side switching transistor Q31 are disconnected. The primary-side switching transistor Q31 is alternately turned on or off based on the control signal, and the input voltage Vin enables primary-side windings Ta of the first transformer T31, the second transformer T32, and the third transformer T33 to generate primary-side winding voltages respectively.

The primary-side winding voltage on the primary-side winding Ta of the first transformer T31 provides, through the first transformer T31, a first secondary-side winding voltage to the secondary-side sub-winding Tb of the first transformer, and provides, through the transformer T31, a second secondary-side winding voltage to the secondary-side sub-winding Tc of the transformer. Correspondingly, the first input terminal in1 of the drive unit K31 is connected to the output terminal out, and the secondary-side sub-winding Tb1 of the first transformer T31 provides a first drive voltage H1-1 to the upper bridge arm switching transistor G1 through the drive unit K31. The first drive voltage H1-1 is the first secondary-side winding voltage of the first transformer T31. The second input terminal in2 of the drive unit K31 is connected to the output terminal out, and the secondary-side sub-winding Tc of the first transformer T31 provides a second drive voltage H1-2 to the upper bridge arm switching transistor G1 through the drive unit K31. The second drive voltage H1-2 is the second secondary-side winding voltage of the first transformer T31.

The primary-side winding voltage on the primary-side winding Ta of the second transformer T32 provides, through the second transformer T32, a first secondary-side winding voltage to the secondary-side sub-winding Tb of the second transformer, and provides, through the transformer T31, a second secondary-side winding voltage to the secondary-side sub-winding Tc of the transformer. Correspondingly, the first input terminal in1 of the drive unit K32 is connected to the output terminal out, and the secondary-side sub-winding Tb2 of the second transformer T32 provides a first drive voltage H3-1 to the upper bridge arm switching transistor G3 through the drive unit K32. The first drive voltage H3-1 is the first secondary-side winding voltage of the second transformer T32. The second input terminal in2 of the drive unit K32 is connected to the output terminal out, and the secondary-side sub-winding Tc2 of the second transformer T32 provides a second drive voltage H3-2 to the upper bridge arm switching transistor G3 through the drive unit K32. The second drive voltage H3-2 is the second secondary-side winding voltage of the second transformer T32.

The primary-side winding voltage on the primary-side winding Ta of the third transformer T33 provides, through the third transformer T33, a first secondary-side winding voltage to the secondary-side sub-winding Tb of the third transformer, and provides, through the transformer T31, a second secondary-side winding voltage to the secondary-side sub-winding Tc of the transformer. Correspondingly, the first input terminal in1 of the drive unit K33 is connected to the output terminal out, and the secondary-side sub-winding Tb3 of the third transformer T33 provides a first drive voltage H5-1 to the upper bridge arm switching transistor G5 through the drive unit K33. The first drive voltage H5-1 is the first secondary-side winding voltage of the third transformer T33. The second input terminal in2 of the drive unit K33 is connected to the output terminal out, and the secondary-side sub-winding Tc3 of the third transformer T33 provides a second drive voltage H5-2 to the upper bridge arm switching transistor G5 through the drive unit K33. The second drive voltage H5-2 is the second secondary-side winding voltage of the third transformer T33.

In this embodiment of this application, the control unit N31 is configured to control operation of the primary-side switching transistor Q31 based on the received feedback voltage signal FB1. Specifically, the control unit N31 may adjust, based on a result of comparing the feedback voltage signal FB 1 with at least one predetermined value, the duty cycle of the control signal outputted by the control unit to the primary-side switching transistor Q31.

In an embodiment, the control unit N31 reduces, in response to that a voltage value of the feedback voltage signal is greater than or equal to a first predetermined value, the duty cycle of the control signal outputted by the control unit N31.

In an embodiment, the control unit N31 increases, in response to that the voltage value of the feedback voltage signal is less than or equal to a second predetermined value, the duty cycle of the control signal outputted by the control unit N31. The second predetermined value is less than the first predetermined value.

In an embodiment, the control unit N31 controls the primary-side switching transistor to be turned off in response to that the voltage value of the feedback voltage signal is greater than or equal to a third predetermined value. The third predetermined value is greater than the first predetermined value.

For ease of description, the following uses the drive circuit 1021 in FIG. 4 as an example for description. A connection manner and a control manner of components in the drive circuit 1022 of the drive circuit 102 in FIG. 4 are similar to those of the drive circuit 1021, and details are not described again. A connection manner and a control manner of components in the drive circuit 1023 and the drive circuit 1024 shown in FIG. 5 are similar to those in the drive circuit 1021 and the drive circuit 1022 of the drive circuit 102 in FIG. 4, and details are not described again.

As shown in FIG. 4, the first drive voltage H1-1 required by the upper bridge arm switching transistor G1 is 15 V, and the second drive voltage H1-2 required by the upper bridge arm switching transistor G1 is -7.5 V If a voltage value of a drive voltage provided by the secondary-side winding of the first transformer T31 through a first drive unit K1 cannot meet the foregoing condition, the upper bridge arm switching transistor G1 cannot be driven.

For ease of description, Taz is a quantity of turns of the primary-side primary winding Ta, and Tdz is a quantity of turns of the primary-side feedback winding Td. Correspondingly, a voltage value of the dotted terminal of the primary-side feedback winding Td of the first transformer T31 is Vv = Vin/Taz * Tdz. Correspondingly, after the voltage provided by the dotted terminal of the primary-side feedback winding Td of the first transformer T31 goes through the voltage division of the resistors R32 and R33, a voltage value of the feedback voltage signal FB1 received by a feedback input terminal of the control unit N31 is recorded as V0.

It may be understood that, the voltage value of the dotted terminal of the primary-side feedback winding Td of the first transformer T31 is greater than or equal to Vv, the voltage value of the feedback voltage signal FB1 is greater than or equal to V0, and the drive voltage provided by the secondary-side winding of the first transformer T31 through the first drive unit K 1 meets a requirement of the upper bridge arm switching transistor G1. The voltage value of the dotted terminal of the primary-side feedback winding Td of the first transformer T31 is less than Vv, the voltage value of the feedback voltage signal FB 1 is less than V0, and the drive voltage provided by the secondary-side winding of the first transformer T31 through the first drive unit K1 cannot meet the requirement of the upper bridge arm switching transistor G1.

Correspondingly, the control unit N31 reduces, in response to that a voltage value of the feedback voltage signal FB1 is greater than or equal to a first predetermined value, the duty cycle of the control signal outputted by the control unit. For example, after outputting the control signal to the primary-side switching transistor Q31 for first duration T3, the control unit N31 stops outputting the control signal for second duration T4. T3 + T4 = T, T3 < T1, and T4 > T2.

Correspondingly, the control unit N31 increases, in response to that a voltage value of the feedback voltage signal FB 1 is less than or equal to a second predetermined value, the duty cycle of the control signal outputted by the control unit. For example, after outputting the control signal to the primary-side switching transistor Q31 for first duration T5, the control unit N31 stops outputting the control signal for second duration T6. T5 + T6 = T, T5 > T1, and T6 < T2.

In this embodiment of this application, the first predetermined value may be a voltage value greater than V0, and the second predetermined value may be a voltage value less than V0. The voltage value of the feedback voltage signal FB 1 is between the first predetermined value and the second predetermined value, and an output voltage outputted by the secondary-side winding of the first transformer T31 can meet the requirement of the upper bridge arm switching transistor G1. Therefore, the control unit N31 may not need to adjust the duty cycle of the control signal outputted by the control unit. The voltage value of the feedback voltage signal FB1 is not between the first predetermined value and the second predetermined value, and an output voltage outputted by the secondary-side winding of the first transformer T31 cannot meet the requirement of the upper bridge arm switching transistor G1. Therefore, the control unit N31 may adjust the duty cycle of the control signal outputted by the control unit.

As shown in FIG. 4, in the drive circuit 1021, a primary-side feedback winding Td of the first transformer T31, a primary-side feedback winding Td of the second transformer T32, and a primary-side feedback winding Td of the third transformer T33 are connected in parallel. Therefore, when the output voltages of the secondary-side winding of the first transformer T31, the secondary-side winding of the second transformer T32, and the secondary-side winding of the third transformer T33 can meet requirements, the voltage value of the feedback voltage signal FB 1 is between the first predetermined value and the second predetermined value. In addition, when the voltage outputted by one of the secondary-side windings of the first transformer T31, the second transformer T32, and the third transformer T33 does not meet the requirement, the voltage value of the feedback voltage signal FB1 is not between the first predetermined value and the second predetermined value, and the control unit N31 may adjust the duty cycle of the control signal outputted by the control unit, to adjust the voltage values of the drive voltages outputted by the first transformer T31, the second transformer T32, and the third transformer T33.

As shown in FIG. 5, in the drive circuit 1023, a primary-side feedback winding Td of the first transformer T31, a primary-side feedback winding Td of the second transformer T32, and a primary-side feedback winding Td of the third transformer T31 are connected sequentially connected in series. Therefore, when the output voltages of the secondary-side winding of the first transformer T31, the secondary-side winding of the second transformer T32, and the secondary-side winding of the third transformer T33 all meet requirements, the voltage value of the feedback voltage signal FB1 is between the first predetermined value and the second predetermined value, and the control unit N31 does not adjust the duty cycle of the control signal outputted by the control unit. In addition, when the voltage outputted by one of the secondary-side windings of the first transformer T31, the second transformer T32, and the third transformer T33 does not meet the requirement, the voltage value of the feedback voltage signal FB1 is not between the first predetermined value and the second predetermined value, and the control unit N31 adjusts the duty cycle of the control signal outputted by the control unit.

It may be understood that any transformer in the first transformer T31, the second transformer T32, and the third transformer T33 encounters a short circuit abnormality or an open circuit abnormality, and as a result an output drive voltage is high. The control unit N31 may detect the abnormality in time based on the voltage feedback signal, and adjust the duty cycle of the control signal based on the voltage feedback signal. Specifically, the control unit N31 stops outputting the control signal, and controls all the three transformers to stop outputting the drive voltage, to implement overvoltage protection for the switching transistors driven by the three transformers.

Correspondingly, the control unit N31 stops outputting the control signal to the primary-side switching transistor Q31 in response to that the voltage value of the feedback voltage signal FB3 is greater than or equal to the third predetermined value. The primary-side switching transistor Q31 is turned off. The third predetermined value is greater than the first predetermined value. Correspondingly, when any one of the first transformer T31, the second transformer T32, and the third transformer T33 encounters a short circuit or an open circuit, the primary-side switching transistor Q31 is turned off, so that the first transformer T31, the second transformer T32, and the third transformer T33 stop outputting the drive voltage, to implement overvoltage protection for the upper bridge arm switching transistor G1, the upper bridge arm switching transistor G3, and the upper bridge arm switching transistor G5.

The motor controller 10 and the drive circuit 102 provided in this embodiment of this application may provide drive voltages to a plurality of switching transistors through one drive circuit, and a large quantity of components such as control circuits and primary-side switches do not need to be disposed, so that a quantity of components of the motor controller 10 and the drive circuit 102 can be reduced, to reduce complexity of the drive circuit 102. In addition, three transformers in the motor controller 10 and the drive circuit 102 provided in this embodiment of this application are separately disposed, to reduce complexity of a transformer winding structure, reduce a size required for implementing a circuit board area occupied by the drive circuit 102 and the motor controller 10 on a circuit board, and improve anti-interference performance, so that costs of the drive circuit 102, the motor controller 10, and the electric vehicle 1 in which the drive circuit and the motor controller are located are reduced.

Further, the motor controller 10 and the drive circuit 102 that are provided in this embodiment of this application output the voltage feedback signal to the control unit through the primary-side feedback windings of the transformers, so that the control unit controls operation of the primary-side switching transistor based on the voltage feedback signal. The control unit may adjust, based on the voltage feedback signal, a duty cycle at which the primary-side switching transistor is turned on, so that self-voltage balancing of drive signals outputted by the secondary-side windings of the three transformers is implemented through closed-loop voltage control, to reduce deviations between voltage values of the drive signals outputted by the secondary-side windings of the three transformers, ensure consistency of the voltage values of the drive signals outputted by the secondary-side windings of the three transformers, and improve the drive circuit 102 and the motor controller 10.

In the foregoing embodiments, the method performed by the control unit provided in embodiments of this application is described. To implement functions in the method provided in embodiments of this application, the control unit that is used as an execution body may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. It should be noted that division of the modules of the foregoing apparatus is merely logic function division. During actual implementation, some or all modules may be integrated into one physical entity, or the modules may be physically separated. The modules may be all implemented in a form of software invoked by a processing element, or may be all implemented in a form of hardware. Alternatively, some modules may be implemented in a form of software invoked by a processing element, and some modules are implemented in a form of hardware. For example, the modules may be processing elements separately disposed, or may be integrated in a chip of the foregoing apparatus for implementation. In addition, the modules may alternatively be stored in the memory of the foregoing apparatus in a form of program code, and is invoked by a processing element of the foregoing apparatus to perform the functions of the modules. Implementations of other modules are similar to the implementation of the detection module. In addition, all or some of these modules may be integrated together, or may be implemented independently. The processing element herein may be an integrated circuit, and have a signal processing capability. In an implementation process, steps in the foregoing methods or the foregoing modules may be implemented by using a hardware integrated logical circuit in the processing element, or by using instructions in a form of software. For example, the foregoing modules may be one or more integrated circuits configured to implement the foregoing method, for example, one or more application-specific integrated circuits (application-specific integrated circuit, ASIC), one or more digital signal processors (digital signal processor, DSP), or one or more field-programmable gate arrays (field-programmable gate array, FPGA). In another example, when one of the foregoing modules is implemented in a form of calling program code by a processing element, the processing element may be a general-purpose processor, for example, a central processing unit (central processing unit, CPU) or another processor that can invoke the program code. In another example, the modules may be integrated and implemented in the form of a system-on-a-chip (SOC).

In the foregoing embodiments, all or some of the steps performed by the control apparatus may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The available medium may be a magnetic medium (for example, a floppy disk, a hard disk, or a magnetic tape), an optical medium (for example, a DVD), a semiconductor medium (for example, a solid-state drive, solid-state drive (SSD)), or the like.

Persons of ordinary skill in the art may understand that all or some of the steps in the foregoing embodiments may be implemented by a program instructing related hardware. The program may be stored in a computer-readable storage medium. When the program is run, the steps of the method embodiments are performed. The foregoing storage medium includes various media that can store program code, for example, a ROM, a magnetic disk, an optical disc, and the like.

Persons of ordinary skill in the art may understand that, for ease of description of the technical solutions of this application, embodiments of this application are separately described by using functional modules. Circuit components in the modules may partially or completely overlap, and this is not intended to limit the protection scope of this application.

Finally, it should be noted that the foregoing embodiments are merely intended for describing the technical solutions of this application other than limiting this application. Although this application is described in detail with reference to the foregoing embodiments, persons of ordinary skill in the art should understand that modifications may still be made to the technical solutions described in the foregoing embodiments or equivalent replacements may be made to some or all technical features thereof, without departing from the scope of the technical solutions of embodiments of this application.

## Claims

1. A motor controller, wherein the motor controller comprises a bridge arm circuit and a drive circuit, the bridge arm circuit comprises a plurality of switching transistor bridge arms, bridge arm midpoints of the plurality of switching transistor bridge arms are configured to connect to motor windings of a drive motor, the drive circuit is configured to separately provide a plurality of drive voltages to a plurality of switching transistors of the bridge arm circuit, and the drive circuit comprises a plurality of transformers, a primary-side switching transistor, and a control unit, wherein
a primary-side winding of each transformer comprises a primary-side primary winding and a primary-side feedback winding, a secondary-side winding of each transformer is configured to output one drive voltage, one end of each primary-side primary winding is configured to connect to a power supply, the other end of each primary-side primary winding is connected to an end of the primary-side switching transistor, and at least one primary-side feedback winding is configured to provide a feedback voltage signal to the control unit; and
the control unit is configured to control operation of the primary-side switching transistor based on the feedback voltage signal.

2. The motor controller according to claim 1, wherein an undotted terminal of the primary-side primary winding of each transformer is configured to connect to the power supply, and a dotted terminal of the primary-side primary winding of each transformer is connected to an end of the primary-side switching transistor.

3. The motor controller according to claim 1 or 2, wherein a plurality of primary-side feedback windings are connected in parallel, and an end of each primary-side feedback winding provides the feedback voltage signal to the control unit.

4. The motor controller according to claim 3, wherein a dotted terminal of the primary-side feedback winding of each transformer provides the feedback voltage signal to the control unit.

5. The motor controller according to claim 1 or 2, wherein primary-side feedback windings of the plurality of transformers are sequentially connected in series, and an end of the primary-side feedback winding of one transformer is configured to provide the feedback voltage signal to the control unit.

6. The motor controller according to claim 5, wherein a dotted terminal of the primary-side feedback winding of one transformer provides the feedback voltage signal to the control unit, and an undotted terminal of the primary-side feedback winding of the transformer is connected to a dotted terminal of the primary-side feedback winding of another transformer.

7. The motor controller according to any one of claims 1 to 6 , wherein the control unit comprises a feedback signal input terminal, the feedback signal input terminal receives, through a bleeder circuit, the voltage feedback signal provided by the at least one primary-side feedback winding, and the bleeder circuit comprises two resistors and at least one diode, wherein
two ends of one resistor are respectively connected to the feedback signal input terminal and one end of the other resistor, the other end of the other resistor is grounded, connection terminals of the two resistors are configured to connect to a cathode of the at least one diode, and an anode of the at least one diode is configured to receive the voltage feedback signal provided by the at least one primary-side feedback winding.

8. The motor controller according to any one of claims 1 to 7, wherein the secondary-side winding of each transformer comprises two secondary-side sub-windings, two ends of each secondary-side sub-winding are connected by a diode and a capacitor that are connected in series, and an end of one secondary-side sub-winding is connected to another end of the other secondary-side sub-winding.

9. The motor controller according to claim 8, wherein a dotted terminal of one secondary-side sub-winding is connected to a positive electrode of a first diode, a negative electrode of the first diode is connected to one end of a first capacitor, and the other end of the first capacitor is connected to an undotted terminal of the secondary-side sub-winding;
an undotted terminal of the other secondary-side sub-winding is connected to one end of a second capacitor, the other end of the second capacitor is connected to a positive electrode of a second diode, and a negative electrode of the second diode is connected to the undotted terminal of the secondary-side sub-winding; and
the undotted terminal of the secondary-side sub-winding is connected to a dotted terminal of the other secondary-side sub-winding.

10. The motor controller according to any one of claims 1 to 9, wherein the secondary-side winding of each transformer is configured to connect to one switching transistor by one drive unit, and the drive unit comprises a first input terminal, a second input terminal, and an output terminal, wherein
an end of one secondary-side sub-winding in the secondary-side winding of each transformer is configured to connect to the first input terminal of the drive unit, an end of the other secondary-side sub-winding in the secondary-side winding is configured to connect to the second input terminal of the drive unit, and a control terminal of the switching transistor is configured to connect to the output terminal of the drive unit;
the first input terminal and the output terminal of each drive unit are connected, and the secondary-side winding outputs a first drive voltage to the control terminal of the switching transistor; and
the second input terminal and the output terminal of each drive unit are connected, and the secondary-side winding outputs a second drive voltage to the control terminal of the switching transistor.

11. The motor controller according to any one of claims 1 to 10, wherein the motor controller comprises two drive circuits, and each switching transistor bridge arm comprises an upper bridge arm switching transistor and a lower bridge arm switching transistor, wherein
one drive circuit is configured to separately provide the plurality of drive voltages to the plurality of upper bridge arm switching transistors of the bridge arm circuit; and
the other drive circuit is configured to provide the plurality of drive voltages to the plurality of upper bridge arm switching transistors of the bridge arm circuit.

12. The motor controller according to any one of claims 1 to 11, wherein the primary-side switching transistor is periodically and alternately turned on or off based on a control signal outputted by the control unit, and the control unit is configured to:
adjust, based on a result of comparing the feedback voltage signal with at least one predetermined value, a duty cycle of the control signal outputted by the control unit.

13. The motor controller according to claim 12, wherein the control unit is configured to:
reduce, in response to that a voltage value of the feedback voltage signal is greater than or equal to a first predetermined value, the duty cycle of the control signal outputted by the control unit; and
increase, in response to that the voltage value of the feedback voltage signal is less than or equal to a second predetermined value, the duty cycle of the control signal outputted by the control unit, wherein the second predetermined value is less than the first predetermined value.

14. A drive circuit, comprising a plurality of transformers, a primary-side switching transistor, and a control unit, wherein
a primary-side winding of each transformer comprises a primary-side primary winding and a primary-side feedback winding, a secondary-side winding of each transformer is configured to output one drive voltage, one end of each primary-side primary winding is configured to connect to a power supply, the other end of each primary-side primary winding is connected to an end of the primary-side switching transistor, and at least one primary-side feedback winding is configured to provide a feedback voltage signal to the control unit; and
the control unit is configured to control operation of the primary-side switching transistor based on the feedback voltage signal.

15. A power device, comprising a drive motor and the motor controller according to any one of claims 1 to 14, wherein the motor controller is configured to supply power to the drive motor.

16. An electric vehicle, comprising a wheel, a drive motor, and the motor controller according to any one of claims 1 to 14, wherein the motor controller is configured to supply power to the drive motor, and the drive motor is configured to receive power supplied by the motor controller and drive the wheel.
